# EUROPÄISCHE PATENTANMELDUNG

(11) **EP 4 142 093 A2**
(43) Veröffentlichungstag der Anmeldung: **01.03.2023**
(21) Anmeldenummer: 22187042.1
(22) Anmeldetag: 26.07.2022
(51) Int. Cl.: H02J 3/32, H02J 3/38

(54) **VERFAHREN ZUM BETREIBEN EINES ENERGIESYSTEMS**

(30) Priorität: 31.08.2021 DE 102021122489
(71) Anmelder: Viessmann Climate Solutions SE, 35108 Allendorf (DE)
(72) Erfinder: FÜTTERER, Cornelius, 37339 Gernrode (DE); LANDAU, Christian, 34295 Edermünde-Besse (DE)
(74) Vertreter: MERH-IP Matias Erny Reichl Hoffmann Patentanwälte PartG mbB

(57) **Zusammenfassung**

Ein Energiesystem (1) für ein Gebäude umfasst ein internes Stromnetz (4), mindestens eine lokale Energiequelle (BAT, PV) zum Bereitstellen elektrischer Energie ans interne Stromnetz (4), mindestens einen ans interne Stromnetz (4) angeschlossenen Verbraucher (L, HH), der Energie verbraucht, einen Netzanschlusspunkt (NAP), der das interne Stromnetz (4) mit einem öffentlichen Versorgungsnetz (3) verbindet, zum Beziehen von Energie aus dem öffentlichen Versorgungsnetz (3) und/oder zum Einspeisen von Energie ins öffentliche Versorgungsnetz (3) und eine Regeleinrichtung (10) zum Regeln des Energiesystems (1). Die Regeleinrichtung (10) ist konfiguriert Eigenschaften einer Leistungsaufnahme des Verbrauchers (L) zu erfassen, ein Regelsignal zum Regeln der Energiequelle (BAT, PV) in Abhängigkeit der Eigenschaften der Leistungsaufnahme des Verbrauchers (L) zu erzeugen und das Regelsignal an die Energiequelle (BAT, PV) auszugeben.

## Beschreibung

Die vorliegende Erfindung betrifft ein Verfahren zum Betreiben eines Energiesystems zum Versorgen eines Gebäudes mit elektrischer Energie. Insbesondere sollen Eigenschaften einer elektrischen Leistungsaufnahme eines Verbrauchers erkannt und die Versorgung des Verbrauchers mit elektrischer Energie so gesteuert werden, dass ein Bezug elektrischer Energie aus einem öffentlichen Versorgungsnetz minimiert werden kann.

Der wachsende Anteil erneuerbarer Energien wie zum Beispiel Strom aus Windkraft oder Sonnenenergie führt dazu, dass zu bestimmten Zeiten Strom aus solchen regenerativen Quellen im Überfluss vorhanden ist, während zu anderen Zeiten fossile Spitzenlastkraftwerke emissionsbelasteten Strom erzeugen müssen. Da das Speichern elektrischer Energie mit vielen technischen Hürden verbunden ist, hat sich das Bedürfnis entwickelt, den Verbrauch durch Endabnehmer entsprechend der Verfügbarkeit elektrischer Energie im Netz zu steuern, so dass bei Leistungsspitzen eine erhöhte Abnahme und bei Leistungstälern eine geringere Abnahme herbeigeführt werden kann.

Ähnlich verhält es sich bei Gebäuden (z.B. Wohnhäuser oder gewerbliche Gebäude) mit dezentralen Energieerzeugern, wie z.B. einer Brennstoffzelle, einer Photovoltaik-Anlage (PV-Anlage) oder anderen Erzeugern, die elektrischen Strom liefern. Hierbei ist es oft wünschenswert, den lokal erzeugen Strom lokal zu verbrauchen oder zu speichern und den Bezug von Strom aus einem öffentlichen Versorgungsnetz zu minimieren. Zum Speichern der lokal erzeugten elektrischen Energie werden in der Regel Batterien verwendet, die bei einem Überangebot an lokal erzeugtem Strom Energie speichern und bei Bedarf durch lokale Verbraucher wieder abgeben.

Einen Speicher, mit dem elektrische Energie in ein Stromnetz eingespeist und aus diesem entnommen werden kann, offenbart beispielsweise die DE 10 2010 001874 A1. Der darin beschriebene Speicher umfasst eine Steuerung, mit der die Abgabe an das Stromnetz und die Aufnahme von Energie aus dem Stromnetz gesteuert wird. Mit solch einem Speicher kann Energie in Zeiten eines Überangebots aufgenommen werden und in Zeiten eines erhöhten Bedarfs wieder abgegeben werden. Entsprechend kann der Speicher zum Beispiel auch zum Glätten von Leistungsspitzen bzw. Leistungstälern eingesetzt werden.

Eine mögliche Schwierigkeit beim Versorgen lokaler Verbraucher mit elektrischer Energie aus einem lokalen Speicher (z.B. einer Batterie) kann dann auftreten, wenn der lokale Verbraucher schneller ein- und ausschaltet als die Regelung des Speichers auf die sich ändernde Last reagieren kann. Wenn die Regelung aber nicht schnell genug auf Lastschwankungen reagieren kann, wird der Verbraucher mit Energie aus dem öffentlichen Versorgungsnetz versorgt. Somit kann es dazu kommen, dass die gespeicherte Energie nicht optimal genutzt werden kann.

Der vorliegenden Erfindung liegt die Aufgabe zugrunde ein verbessertes Verfahren zum Betreiben eines Energiesystems für ein Gebäude anzugeben, das die oben genannten Probleme löst. Gemäß einem ersten Gesichtspunkt der Erfindung wird die Aufgabe durch ein Verfahren nach Anspruch 1 gelöst. Gemäß einem zweiten Gesichtspunkt der Erfindung wird die Aufgabe durch ein Energiesystem nach Anspruch 10 gelöst. Weitere Aspekte der Erfindung ergeben sich aus den Unteransprüchen, den Figuren und der folgenden Beschreibung von Ausführungsbeispielen.

In der vorliegenden Beschreibung werden die Begriffe Energie und Leistung zum Teil synonym verwendet. Es versteht sich für den Fachmann, dass mit einer Leistungsaufnahme ein Energieverbrauch pro Zeit gemeint ist, und dass ein bestimmter Energieverbrauch als integrierte Leistungsaufnahme über einen bestimmten Zeitraum aufgefasst werden kann.

Das erfindungsgemäße Energiesystem umfasst ein internes Stromnetz, mindestens eine lokale Energiequelle, mindestens einen ans interne Stromnetz angeschlossenen Verbraucher, einen Netzanschlusspunkt und eine Regeleinrichtung.

Über das interne Stromnetz kann elektrische Energie an Verbraucher im Gebäude bereitgestellt werden. Das interne Stromnetz ist insbesondere über den Netzanschlusspunkt mit einem öffentlichen Versorgungsnetz verbunden. Mindestens ein Verbraucher ist mit dem internen Stromnetz verbunden und kann elektrische Energie verbrauchen.

Die lokale Energiequelle kann elektrische Energie ans interne Stromnetz bereitstellen. Die elektrische Energie kann über das interne Stromnetz an Verbraucher bereitgestellt werden und/oder über den Netzanschlusspunkt ins öffentliche Versorgungsnetz eingespeist werden. Bei der Energiequelle kann es sich insbesondere um eine dezentrale Energiequelle handeln.

Die Energiequelle kann zum Beispiel ein Energiespeicher zum Speichern elektrischer Energie und/oder ein lokaler Energieerzeuger sein, der elektrische Energie erzeugt und ans interne Stromnetz bereitstellt. Das Energiesystem umfasst als Energiequelle also mindestens einen Energiespeicher und/oder mindestens einen Energieerzeuger. Wenn im Folgenden auf "eine Energiequelle" oder "die Energiequelle" Bezug genommen wird, kann damit mindestens ein Energiespeicher und/oder mindestens ein Energieerzeuger gemeint sein.

Zum Regeln der Energiequelle kann diese einen regelbaren Wechselrichter aufweisen, der es der Energiequelle ermöglicht, Energie in Form eines Wechselstroms an das interne Stromnetz bzw. an das öffentliche Versorgungsnetz bereitzustellen.

Der lokale (bzw. dezentrale) Energieerzeuger kann ein beliebiger Energieerzeuger sein, der elektrische Energie erzeugt. Neben elektrischer Energie kann der Energieerzeuger auch andere Formen von Energie, beispielsweise in Form von Wärme und/oder Kälte bereitstellen. Beispielsweise kann der Energieerzeuger ein Blockheizkraftwerk (BHKW), eine Brennstoffzelle, eine Windturbine und/oder eine Photovoltaikanlage (PV-Anlage) sein, wobei diese Aufzählung nicht einschränkend zu verstehen ist.

Der lokale Energieerzeuger kann zum Beispiel eine Photovoltaikanlage (PV-Anlage) oder eine Windturbine umfassen, die konfiguriert ist, Verbraucher und/oder Energiespeicher über das interne Stromnetz mit elektrischer Energie zu versorgen. Eine PV-Anlage weist üblicherweise einen Wechselrichter auf, um den von der PV-Anlage erzeugten Gleichstrom in Wechselstrom umzuwandeln. Der Wechselrichter kann zum Beispiel von der Regeleinrichtung gesteuert bzw. geregelt werden. Ferner kann die PV-Anlage einen Stromzähler umfassen, um die erzeugte Energiemenge zu messen. Insbesondere kann ein Teil der erzeugten Energie zum Laden des Energiespeichers verwendet werden. Ferner kann Energie von der PV-Anlage über den Netzanschlusspunkt ins öffentliche Versorgungsnetz eingespeist werden. Die eingespeiste Energie kann gemessen werden, um eine entsprechende Vergütung zu berechnen.

Der Energiespeicher zum Speichern elektrischer Energie kann beispielsweise eine Batterie oder einen Akkumulator, wie z.B. einen Lithium-Ionen-Akkumulator aufweisen. Ferner kann der Energiespeicher eine Ladestation für ein Elektrofahrzeug aufweisen, über die ebenfalls elektrische Energie gespeichert werden kann. Der Energiespeicher kann elektrische Energie aus dem öffentlichen Versorgungsnetz und/oder lokal erzeugte elektrische Energie vom lokalen Energieerzeuger speichern.

Vorzugsweise wird der Energiespeicher mit elektrischer Energie vom lokalen Energieerzeuger geladen. Es kann jedoch bevorzugt sein, dass lokal erzeugte Energie sofort ans interne Stromnetz abgegeben und verbraucht wird, so dass Verluste durch das Speichern der Energie vermieden werden können.

Wie oben beschrieben ist mindestens ein Verbraucher mit dem internen Stromnetz verbunden. Üblicherweise kann eine Vielzahl verschiedener Verbraucher mit dem internen Stromnetz verbunden sein. Mindestens einer der Verbraucher ist eine hochfrequente Last. Neben der hochfrequenten Last kann eine Vielzahl herkömmlicher Verbraucher mit dem internen Stromnetz verbunden sein.

Eine hochfrequente Last ist ein Verbraucher, der seine Leistungsaufnahme mit einer hohen Frequenz ändert, indem er z.B. schnell ein- und ausschaltet oder bei dem sich die aufgenommene Leistung schnell ändert. Ein solcher Verbraucher wird im Folgenden als "hochfrequenter Verbraucher" oder "hochfrequente Last" bezeichnet. Die Begriffe "hohe Frequenz" und "schnell" sind hierbei relativ zu einer Regelgeschwindigkeit der lokalen Energiequelle bzw. eines Wechselrichters der Energiequelle zu verstehen. Mit anderen Worten, die hochfrequente Last ändert ihre Leistungsaufnahme schneller als eine herkömmliche Regelung der Energiequelle bzw. des Wechselrichters darauf reagieren kann, um die Änderung zu kompensieren und einen Bezug von Energie aus dem öffentlichen Stromnetz zu vermeiden. Beispiele eines solchen hochfrequenten Verbrauchers umfassen ein Vorheizregister, eine Heizplatte, ein schaltendes Netzgerät, und dergleichen.

Die Regeleinrichtung regelt das Energiesystem, insbesondere die Energiequelle und/oder die Verbraucher. Die Regeleinrichtung ist über geeignete Leitungen, die drahtlos und/oder drahtgebunden sein können, mit den zu regelnden Einrichtungen (Energiequelle und Verbraucher) verbunden. Über die Leitungen können Regelsignale, Steuersignale und/oder Messsignale von der Regeleinrichtung versendet und/oder empfangen werden.

Außerdem kann die Regeleinrichtung über eine geeignete Schnittstelle mit einem Netzwerk verbunden sein, beispielsweise über ein Gateway mit dem Internet, und kann Daten an einen Server übertragen bzw. vom Server empfangen. Hierdurch kann eine Fernsteuerung, Fernwartung, Fernanalyse usw. des Energiesystems ermöglicht werden. Außerdem können hierdurch rechenintensive Prozesse (z.B. Algorithmen des maschinellen Lernens) und/oder das Speichern von großen Datenmengen an einen Server, ein Rechencluster oder eine Cloud ausgelagert werden.

Ferner kann eine Übertragung von Daten über ein Kommunikationsnetz, zum Beispiel ein Mobilfunknetz, ein Telefonnetz, ein Intranet und/oder das Internet möglich sein. Der Stromzähler kann insbesondere ein intelligenter Stromzähler sein, der auch als Smart Meter Gateway (SMGW) bezeichnet wird. Der intelligente Stromzähler kann insbesondere dazu eingerichtet sein, Steuersignale zu empfangen, sei es über das öffentliche Versorgungsnetz oder eines der oben genannten Kommunikationsnetze.

Beim Betreiben des Verbrauchers kann Energie aus der Energiequelle und/oder aus dem öffentlichen Versorgungsnetz bezogen werden. Hierbei werden erfindungsgemäß Eigenschaften einer Leistungsaufnahme des Verbrauchers erfasst. Die Regeleinrichtung erzeugt in Abhängigkeit der Eigenschaften der Leistungsaufnahme des Verbrauchers ein Regelsignal zum Regeln der Energiequelle und gibt das Regelsignal an die Energiequelle aus. Ziel des Regelns der Energiequelle ist es, einen Bezug elektrischer Energie aus dem öffentlichen Versorgungsnetz zu vermeiden.

Bei einer bevorzugten Ausführung des Verfahrens erfasst die Regeleinrichtung die Eigenschaften der Leistungsaufnahme des Verbrauchers, indem der Verbraucher seine Eigenschaften der Leistungsaufnahme an die Regeleinrichtung übermittelt. Hierzu können die oben beschriebene Leitungen zwischen Regeleinrichtung und Verbraucher verwendet werden. Beispielsweise kann der Verbraucher ein Signal an die Regeleinrichtung übertragen, welches eine zukünftige, zeitlich abhängige Leistungsaufnahme des Verbrauchers beschreibt. Die Regeleinrichtung kann dann die lokale Energiequelle derart regeln, dass sie die Leistungsaufnahme des Verbrauchers so kompensiert, dass eine vom öffentlichen Versorgungsnetz aufgenommene Energie minimiert wird bzw. Null ist.

Beispielsweise kann der Verbraucher der Regeleinrichtung mitteilen, dass er während einer festgelegten Zeitspanne mit einer festgelegten Schaltfrequenz und festgelegten Amplitude betrieben wird. Entsprechend kann dann die Regeleinrichtung die lokale Energiequelle so regeln, dass die Energiequelle genau die vom Verbraucher benötigte Leistung bereitstellt.

In einer weiteren bevorzugten Ausführung des Verfahrens wird mittels eines Stromzählers am Netzanschlusspunkt die vom Versorgungsnetz bezogene und/oder ins Versorgungsnetz eingespeiste Energie gemessen und ein entsprechendes Messsignal erzeugt. Ein hochfrequenter Verbraucher, der beispielsweise mit hoher Frequenz ein- und ausschaltet, erhöht bzw. verringert den Gesamtbedarf an elektrischer Leistung im internen Stromnetz mit hoher Frequenz. Eine solche schnelle Schwankung der Leistungsaufnahme führt zu einer entsprechenden Schwankung der am Netzanschlusspunkt vom Versorgungsnetz bezogenen Leistung. Abhängig vom Regelkreis (einschließlich einer Messeinrichtung wie z.B. dem Stromzähler) kann eine Ausregelzeit zu langsam sein, um die Schwankung mittels entsprechender Regelung der lokalen Energiequelle zu kompensieren.

Vorzugsweise wird das vom Stromzähler erzeugte Messsignal von der Regeleinrichtung analysiert und Eigenschaften der Leistungsaufnahme des Verbrauchers werden anhand des Messsignals ermittelt. Eigenschaften der Leistungsaufnahme können beispielsweise eine Schaltfrequenz des Verbrauchers und/oder eine Amplitude umfassen. Im Allgemeinen kann hierbei ein beliebiges sich wiederholendes Schaltmuster bzw. Lastmuster des Verbrauchers festgestellt werden. Entsprechend kann die Regeleinrichtung ein Regelsignal erzeugen, dass die Energiequelle derart regelt, dass die Leistungsaufnahme des Verbrauchers in Abhängigkeit des Schaltmusters bzw. des Lastmusters des Verbrauchers kompensiert wird. Im Ergebnis kann eine Leistungsaufnahme aus dem öffentlichen Versorgungsnetz vermieden bzw. minimiert werden.

Der Begriff "Schaltmuster" bezeichnet eine beliebige zeitliche Abfolge von Ein- und Ausschaltvorgängen des Verbrauchers. Der Begriff "Lastmuster" bezeichnet eine beliebige zeitliche Änderung der Leistungsaufnahme des Verbrauchers. Ziel des erfindungsgemäßen Verfahrens ist es, hochfrequente sich widerholende Schaltmuster bzw. Lastmuster zu erkennen und mittels Regelung der lokalen Energiequelle zu kompensieren.

Bei einem bevorzugten Verfahren wird das Regelsignal in Abhängigkeit der Schaltfrequenz des Verbrauchers erzeugt, wenn die Schaltfrequenz größer als eine erste Grenzfrequenz ist. Mittels der ersten Grenzfrequenz kann die oben beschriebene Eigenschaft der hochfrequenten Last quantifiziert werden. Insbesondere kann die erste Grenzfrequenz in Abhängigkeit der Regelgeschwindigkeit der herkömmlichen Kompensation am Netzanschlusspunkt festgelegt werden. Beispielsweise kann die erste Grenzfrequenz in einem Bereich von 0,5 Hz bis 2 Hz liegen.

Da langsame Änderungen der Leistungsaufnahme durch die herkömmliche Kompensation ausgeglichen werden, soll die erfindungsgemäße Regelung nur dann eingreifen, wenn die Laständerungen hochfrequent sind. Daher durchläuft das Messsignal vom Stromzähler ein Hochpassfilter, das eine zweite Grenzfrequenz aufweist. Die zweite Grenzfrequenz kann vorzugsweise kleiner als die erste Grenzfrequenz sein.

In bestimmten Anwendungen kann es insbesondere auch vorteilhaft sein, wenn die zweite Grenzfrequenz größer als die erste Grenzfrequenz ist. Im Allgemeinen sollen die erste Grenzfrequenz und die zweite Grenzfrequenz aufeinander abgestimmt sein, um einen optimalen Betrieb zu erreichen.

Insbesondere liegt die zweite Grenzfrequenz des Hochpassfilters im Bereich der Einschwingdynamik der herkömmlichen Kompensations-Regelung, die beispielsweise eine Einschwingzeit von ungefähr zwei Sekunden aufweisen kann (0,5 Hz). Die zweite Grenzfrequenz des Hochpassfilters kann vorzugsweise in einem Bereich von 0,1 bis 2 Hz liegen.

Erfindungsgemäß werden somit zwei parallele Regelwege realisiert: ein erster Regelweg dient einer herkömmlichen, "langsamen" Kompensation von Laständerungen. Ein zweiter Regelweg parallel zum ersten Regelweg führt eine schnelle Regelung durch, welche die Leistungsaufnahme der hochfrequenten Lasten in Abhängigkeit der Eigenschaften der Leistungsaufnahme kompensiert. Der zweite Regelweg kann vorzugsweise ein Hochpassfilter aufweisen.

Der erste Regelweg für die herkömmliche, "langsame" Kompensation weist eine im Vergleich zur "schnellen" Kompensation große Reaktionszeit von beispielsweise zwei Sekunden oder mehr auf. Die Reaktionszeit ergibt sich beispielsweise aus der benötigten Zeit zum Messen der Leistungsaufnahme am Stromzähler, durch Verzögerung aufgrund der Kommunikation zwischen Stromzähler und Regeleinrichtung, sowie aus der Reaktionszeit des Wechselrichters der lokalen Energiequelle. Der erste Regelweg kann beispielsweise als herkömmlicher PI-Regler oder PID-Regler implementiert sein.

Der zweite Regelweg für die "schnelle" Kompensation kann durch Analysieren des Messsignals am Netzanschlusspunkt bzw. durch Übertragen der entsprechenden Information vom Verbraucher selbst, schon vor dem eigentlichen Eintreten der Leistungsaufnahme, den Wechselrichter der Energiequelle auf die bevorstehende Änderung der Leistungsaufnahme einstellen. Beispielsweise weiß die Regeleinrichtung, dass ein Verbraucher in 300 ms für eine Sekunde lang einschaltet und dabei 1 kW Leistung aufnimmt, danach wieder ausschaltet, nach 300 ms wieder einschaltet, usw. Entsprechend erzeugt die Regeleinrichtung ein Regelsignal, das den Wechselrichter der lokalen Energiequelle entsprechend schaltet, um somit die Laständerung zu kompensieren.

Die Messung der Leistungsaufnahme sowie die Analyse und Auswertung des Messsignals durch die Regeleinrichtung finden weiterhin auch bei aktiver Regelung statt. Somit kann die Regelung ständig in Abhängigkeit auftretender Änderungen angepasst werden.

Bei einer bevorzugten Ausführung des erfindungsgemäßen Verfahrens umfasst das Auswerten des Messsignals durch die Regeleinrichtung einen Schritt des Erfassens von Leistungswerten in festen Zeitschritten des Messsignals. Insbesondere kann die Regeleinrichtung die erfassten Leistungswerte in einen Ringpuffer schreiben und daraus bestimmen, ob ein sich wiederholendes Schaltmuster bzw. ein sich wiederholendes Lastmuster vorliegen. Ist dies der Fall, kann die Regeleinrichtung anhand des Schaltmusters oder anhand des Lastmusters eine Schaltfrequenz und/oder eine (gegebenenfalls zeitlich veränderliche) Amplitude der Leistungsaufnahme des Verbrauchers bestimmen.

Der Ringpuffer kann insbesondere ein Ringpuffer mit variabler Größe sein. Vorzugsweise bestimmt die Regeleinrichtung die Größe des Ringpuffers in Abhängigkeit der Schaltfrequenz des Verbrauchers.

Das erfindungsgemäße Verfahren kann beispielsweise von einer Regeleinrichtung zum Regeln und/oder Steuern des Energiesystems ausgeführt werden. Die Regeleinrichtung kann eine Speichereinrichtung aufweisen, die ein Programm speichert, das Instruktionen zum Ausführen eines hierin beschriebenen, erfindungsgemäßen Verfahrens umfasst, sowie eine Recheneinrichtung (CPU) zum Ausführen des Programms.

### Kurzbeschreibung der Figuren

Weitere vorteilhafte Ausgestaltungen werden nachfolgend anhand eines in den Zeichnungen dargestellten Ausführungsbeispiels, auf welches die Erfindung jedoch nicht beschränkt ist, näher beschrieben.

Es zeigen schematisch:
- Figur 1: Fig. 1 zeigt ein Energiesystem gemäß einem Ausführungsbeispiel der Erfindung.
- Figur 2: Fig. 2a bis 2c zeigen eine beispielhafte Leistungsaufnahme eines Verbrauchers und eine entsprechende Leistungsabgabe eines Wechselrichters.
- Figur 3: Fig. 3 illustriert eine erfindungsgemäße Regelschleife mit zwei parallelen Wegen.

### Ausführliche Beschreibung der Erfindung anhand von Ausführungsbeispielen

Bei der nachfolgenden Beschreibung einer bevorzugten Ausführungsform der vorliegenden Erfindung bezeichnen gleiche Bezugszeichen gleiche oder vergleichbare Komponenten.

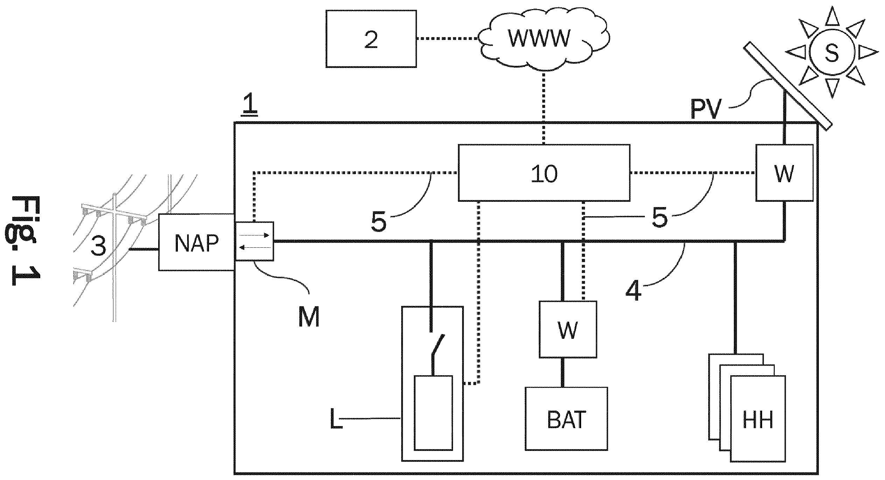

Fig. 1 zeigt eine vereinfachte schematische Darstellung eines Ausführungsbeispiels eines erfindungsgemäßen Energiesystems 1 in einem Gebäude. Bei dem Gebäude kann es sich insbesondere um ein Wohngebäude oder ein Bürogebäude handeln. Das in Fig. 1 gezeigte Energiesystem 1 umfasst eine Photovoltaikanlage PV (im Folgenden auch als PV-Anlage abgekürzt), die Strahlungsenergie von der Sonne S in elektrische Energie umwandelt. Statt einer PV-Anlage oder zusätzlich zur PV-Anlage kann das Energiesystem 1 andere erneuerbare Energieerzeuger verwenden, wie zum Beispiel eine Windturbine.

Ein Wechselrichter W wandelt den von der PV-Anlage erzeugten Gleichstrom in Wechselstrom um und speist ihn in ein internes Stromnetz 4 des Gebäudes ein. Am internen Stromnetz 4 ist eine Vielzahl von Verbrauchern HH angeschlossen, die Energie verbrauchen. Ferner ist mindestens eine hochfrequente Last L (z.B. ein Vorheizregister einer Lüftung) am internen Stromnetz 4 angeschlossen. Die hochfrequente Last L schaltet im Betrieb regelmäßig mit einer im Wesentlichen konstanten Frequenz von beispielsweise 0,5 bis 2 Hz und einer Amplitude von beispielsweise 1 kW ein und aus.

Die durchgezogenen Linien symbolisieren hier das interne Stromnetz 4 des Gebäudes. Gepunktete Linien symbolisieren Kommunikationsleitungen 5 für den Datenverkehr, zum Beispiel zum Übertragen von Messsignalen und/oder zum Übertragen von Regelsignalen zum Steuern oder Regeln und/oder für den Datenaustausch mit einem Server 2 über das Internet WWW beziehungsweise in einem Intranet oder einer Cloud.

Das interne Stromnetz 4 des Gebäudes ist über einen Netzanschlusspunkt NAP mit einem öffentlichen Versorgungsnetz 3 verbunden, das von einem Energieversorgungsunternehmen (Energieversorger) beziehungsweise Netzbetreiber betrieben wird. Ein Stromzähler M misst den Energieverbrauch (Leistungsaufnahme), der vom internen Stromnetz 4 aus dem öffentlichen Versorgungsnetz 3 bezogen wird, sowie eine Menge an Energie (beziehungsweise produzierte Leistung integriert über die Zeit), die vom internen Stromnetz 4 in das öffentliche Versorgungsnetz 3 eingespeist wird. Der Stromzähler M kann ein intelligenter Stromzähler, wie beispielsweise ein Smart Meter Gateway sein, das mit dem Internet oder einem Intranet verbunden sein kann. Der Stromzähler M kann über das Internet Messwerte an den Server 2 senden beziehungsweise Steuersignale empfangen. Ferner kann eine Regeleinrichtung 10 des Energiesystems 1 Messwerte vom Stromzähler M erfassen.

Das Energiesystem 1 umfasst einen Energiespeicher BAT zum Speichern elektrischer Energie, der zum Beispiel aus einer Vielzahl von Batterien beziehungsweise Akkumulatoren (Akkus) aufgebaut sein kann.

Der Energiespeicher BAT umfasst einen Wechselrichter, der Wechselstrom aus dem Stromnetz 4 zum Laden des Energiespeichers BAT in Gleichstrom umwandelt. Ferner kann der Wechselrichter Gleichstrom vom Energiespeicher BAT in Wechselstrom für das interne Stromnetz 4 umwandeln. Zum Laden des Energiespeichers BAT mit Energie von der PV-Anlage kann auch eine direkte Stromleitung (nicht dargestellt) zwischen PV-Anlage und Energiespeicher BAT vorgesehen sein, so dass ein Wandeln zwischen Gleichstrom und Wechselstrom beim Laden des Energiespeichers BAT entfallen kann.

Eine Vielzahl von Verbrauchern HH ist am internen Stromnetz 4 des Gebäudes angeschlossen. Die Verbrauchern HH sind beispielsweise herkömmliche Haushaltsgeräte und/oder Beleuchtungsmittel oder sonstige Verbraucher, die keine hochfrequenten Lasten sind.

Der Energiebedarf der Verbraucher HH, L soll bevorzugt von der PV-Anlage oder vom Energiespeicher BAT gedeckt werden, ohne dass Energie aus dem öffentlichen Versorgungsnetz 3 bezogen wird. Ein direkter Verbrauch des von der PV-Anlage erzeugten Stroms ist besonders effizient, da Verluste durch das Laden und Entladen des Energiespeichers BAT vermieden werden können.

Wenn die von der PV-Anlage produzierte Leistung nicht groß genug ist, um den Bedarf der Verbraucher HH, L zu decken, kann beispielsweise ein Teil der benötigten Energie vom Energiespeicher BAT bezogen werden. Wenn der Bedarf der Verbraucher HH, L weder von der PV-Anlage noch vom Energiespeicher BAT gedeckt werden kann, so kann auch Energie aus dem öffentlichen Versorgungsnetz 3 über den Netzanschlusspunkt NAP bezogen werden. Je effizienter das Energiesystem 1 betrieben wird, desto weniger Energie muss aus dem öffentlichen Versorgungsnetz 3 bezogen werden. Die Regeleinrichtung 10 erfasst die Verbrauchswerte der Verbraucher HH, L und passt den Betriebszustand des Energiesystems 1 entsprechend an, um den Bezug von Energie aus dem öffentlichen Netz 3 zu minimieren.

Die Regeleinrichtung 10 ist über Kommunikationsleitungen 5 mit dem Wechselrichter WR der PV-Anlage, mit dem Energiespeicher BAT, mit dem Stromzähler M am Netzanschlusspunkt NAP, mit der Verbraucher L und über das Internet WWW mit dem Server 2 verbunden. Statt drahtgebundener Kommunikationsleitungen 5 kann (teilweise) auch eine drahtlose Kommunikation oder eine Kommunikation mittels Lichtwellenleitern zwischen der Regeleinrichtung 10 und den genannten Komponenten des Energiesystems 1 vorgesehen sein.

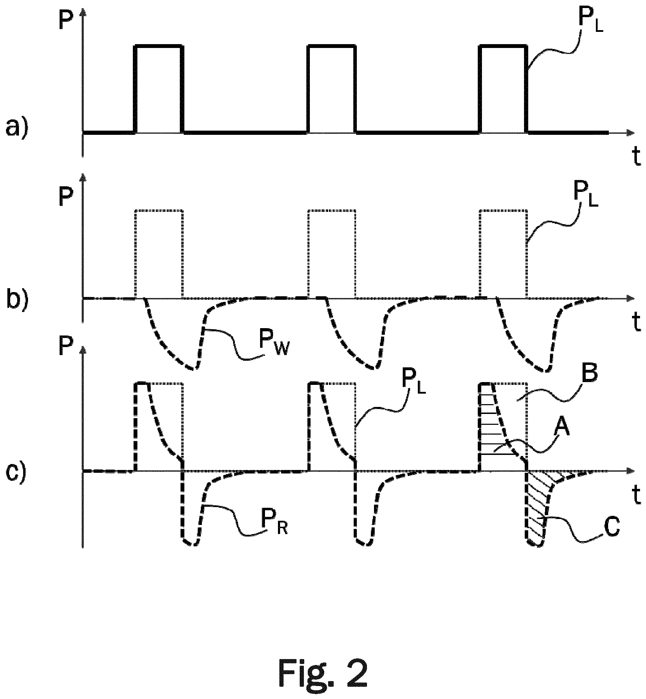

Anhand von Fig. 2 wird im Folgenden das durch die Erfindung zu lösende Problem erläutert. Die horizontale Achse in Fig. 2 zeigt einen Verlauf der Zeit t. Auf der vertikalen Achse wird Leistung P aufgetragen.

Fig. 2a zeigt einen beispielhaften zeitlichen Verlauf einer Leistungsaufnahme P_{L} einer hochfrequenten Last. Die hochfrequente Last schaltet sich beispielsweise jede Sekunde für 270 ms mit einer Amplitude von 500 W ein. Danach bleibt die Last für 730 ms ausgeschaltet. Die Schaltfrequenz beträgt daher 1 Hz. Diese in Fig. 2a dargestellte Last soll von der Energiequelle PV, BAT kompensiert werden.

Fig. 2b illustriert eine Leistungsabgabe Pw am Wechselrichter (gestrichelte Linie) der Energiequelle BAT, PV. Wie in Fig. 2b zu erkennen wird die Leistung Pw mit einiger Verzögerung hochgefahren und erreicht ihr Maximum, wenn die Last (gepunktete Linie in Fig. 2b) bereits wieder ausgeschaltet ist. Somit kommt die Kompensation der Last PL durch die Energiequelle PV, BAT zu spät.

Fig. 2c illustriert den aus Pw und P_{L} resultierenden Leistungsverlauf P_{R} am Netzanschlusspunkt NAP. Da die Kompensation durch die Energiequelle PV, BAT zu spät kommt, kann in etwa die erste Hälfte des Leistungsbedarfs P_{L} der Last L nicht von der Energiequelle PV, BAT bedient werden, so dass eine Leistungsaufnahme aus dem öffentlichen Versorgungsnetz 4 notwendig ist, dargestellt als horizontal schraffierte Fläche A.

Erst die zweite Hälfte des Leistungsbedarfs P_{L} der Last L kann von der Energiequelle PV, BAT gedeckt werden, was in Fig. 2c durch die nichtschraffierte Fläche B im gepunkteten Verlauf P_{L} angedeutet ist. Durch die Verzögerung beim Regeln des Wechselrichters W der Energiequelle PV, BAT wird nach Ausschalten der Last L noch die mit C bezeichnete Energie (schräg schraffiert in Fig. 2c) abgegeben. Diese Energie wird am Netzanschlusspunkt NAP ins öffentliche Versorgungsnetz 4 eingespeist. Die langsame Kompensation ist somit sogar zum Teil kontraproduktiv.

Fläche A stellt somit einen unerwünschten Bezug von Energie aus dem öffentlichen Versorgungsnetz 4 dar. Fläche B ist eine gewünschte Kompensation der Leistungsaufnahme P_{L} durch die Last L. Fläche C ist eine ungewünschte Einspeisung von Leistung ins öffentliche Versorgungsnetz 4. Jae nach Frequenz der schnellen Laständerung können die Flächen A, B und C unterschiedlich groß ausfallen. In besonders ungünstigen Fällen kann die erwünschte Fläche B sehr klein werden, so dass praktisch keine Energie von der Energiequelle BAT, PV von der hochfrequenten Last L verbraucht werden kann.

Das Ziel der vorliegenden Erfindung kann somit darin gesehen werden, die Flächen A und C zu minimieren bzw. möglichst auf null zu reduzieren bzw. die Fläche B zu maximieren. Dies kann insbesondere dadurch erreicht werden, dass die Kurve Pw genau einer invertierten Kurve P_{L} entspricht.

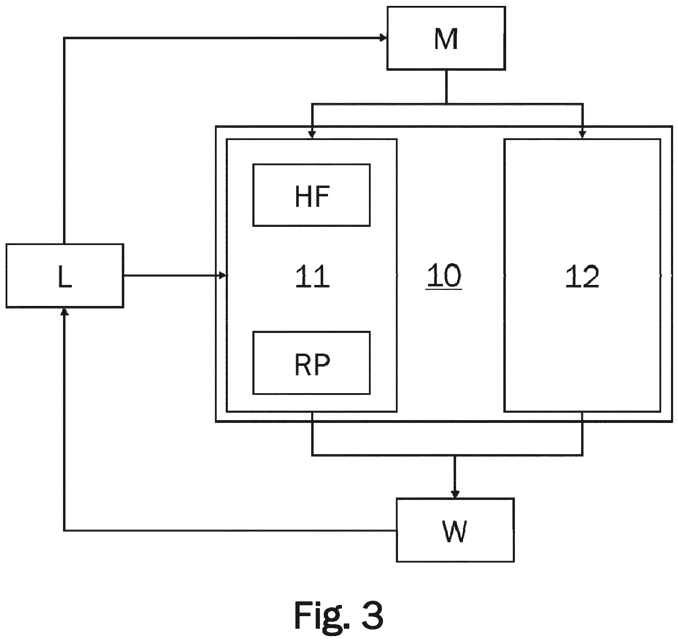

Fig. 3 zeigt eine beispielhafte Illustration einer erfindungsgemäßen Regelschleife 10 mit zwei parallelen Wegen 11 und 12. Der Baustein 12 entspricht der herkömmlichen, "langesamen" Regelung, wie sie auch anhand von Fig. 2 beschrieben wurde. Der Baustein 11 illustriert die erfindungsgemäße, "schnelle" Regelung zum Kompensieren einer hochfrequenten Last L. Die schnelle Regelung 11 umfasst beispielsweise ein Hochpassfilter HF und einen Ringpuffer RP. Ferner kann die Regeleinrichtung 10 noch eine zentrale Recheneinheit (eine CPU) und eine Speichereinrichtung, sowie verschiedene Schnittstellen zum Empfangen und Übertragen von Daten bzw. Signalen aufweisen.

Die Regelschleife wird insbesondere mit der zuvor beschriebenen Regeleinrichtung 10 implementiert. Die Regeleinrichtung 10 empfängt ein Messsignal vom Stromzähler M und wertet das Messsignal aus, um Eigenschaften der Leistungsaufnahme des Verbrauchers L anhand des Messsignals zu ermitteln. In Abhängigkeit der Eigenschaften der Leistungsaufnahme des Verbrauchers L erzeugt die Regeleinrichtung 10 ein Regelsignal zum Regeln des Wechselrichters W der Energiequelle BAT, PV und gibt das Regelsignal an den Wechselrichter W aus. Der Wechselrichter W (bzw. die Energiequelle BAT, PV) versorgt den Verbraucher L über das interne Stromnetz 4 mit Energie.

Der erste Regelweg 12 für die herkömmliche, "langsame" Kompensation weist eine im Vergleich zur "schnellen" Kompensation große Reaktionszeit von beispielsweise zwei Sekunden oder mehr auf. Die Reaktionszeit ergibt sich beispielsweise aus der benötigten Zeit zum Messen der Leistungsaufnahme am Stromzähler M, Verzögerungen aufgrund der Kommunikation zwischen Stromzähler M und Regeleinrichtung 10, sowie aus der Reaktionszeit des Wechselrichters W der lokalen Energiequelle PV, BAT.

Der zweite Regelweg 11 für die "schnelle" Kompensation kann durch Analysieren des Messsignals am Netzanschlusspunkt NAP bzw. durch Übertragen der entsprechenden Information vom Verbraucher L direkt an die Regeleinrichtung 10, schon vor dem eigentlichen Eintreten der Leistungsaufnahme, den Wechselrichter W der Energiequelle auf die bevorstehende Änderung der Leistungsaufnahme einstellen. Somit kann die Regeleinrichtung 10 wissen, dass ein Verbraucher L z.B. in 300 ms für eine Sekunde lang einschaltet und dabei 1 kW Leistung aufnimmt, danach wieder ausschaltet, nach 300 ms wieder einschaltet, usw. Entsprechend erzeugt die Regeleinrichtung 10 ein Regelsignal, das den Wechselrichter W der lokalen Energiequelle PV, BAT entsprechend schaltet, um somit die Laständerung zu kompensieren.

Die Messung der Leistungsaufnahme sowie die Analyse und Auswertung des Messsignals durch die Regeleinrichtung 10 finden weiterhin auch bei aktiver Regelung statt. Somit kann die Regelung ständig in Abhängigkeit auftretender Änderungen angepasst werden. Eine zeitliche Synchronisation des Regelsignals wird ebenfalls im zweiten Regelweg 11 vorgenommen.

Das Messsignal des Stromzählers kann wird im zweiten Regelweg 11 hochpassgefiltert werden, so dass nur schnelle Leistungsänderungen an den Kompensationsalgorithmus weitergeleitet werden. Weiterhin wird der Algorithmus nur aktiviert, wenn es sich um eine sich wiederholende Laständerung (periodisches Lastmuster) handelt. Grundlage für die genannte Aktivierung kann beispielsweise eine Autokorrelationsfunktion oder vereinfacht eine Erkennung von wiederkehrenden Lastzuständen sein. Letzteres kann z.B. durch Erkennen eines Wechsels zwischen Leistungswerten von 0 W und 500 W und Zählen der Wechsel durch einen Zähler erreicht werden.

Herzstück des Algorithmus ist ein Ringpuffer bzw. Ringspeicher mit veränderbarer Größe. In diesem Ringpuffer werden die gemessenen Leistungswerte in festen Zeitschritten (z.B. alle 100 ms) abgespeichert. Die Leistungswerte im Ringpuffer setzen sich zusammen aus einem alten Wert (der bereits im Ringpuffer steht) und einem definierten Anteil eines neuen Messwertes. Es handelt sich folglich um tiefpassgefilterte Werte im Ringpuffer.

Die Größe des Ringpuffers soll auf die Periodendauer des Messsignals (beeinflusst durch Laständerung) abgestimmt werden. Hierzu werden die Leistungswerte des Ringpuffers verwendet und negiert an den Wechselrichter weitergeben. Letzterer kompensiert also die aktuelle Last mit historischen Werten.

Die Verzögerungen der Messung werden durch eine Index-Verschiebung im Ringpuffer vorgenommen. Ob der Ringpuffer vergrößert werden muss (größere Periodendauer) oder verkleinert werden muss bestimmt z.B. ein Tracking-Algorithmus. Hierfür ist eine Bewertung der Ringpuffergrößenänderung erforderlich: Die quadratischen Abweichungen am Netzanschlusspunkt NAP geben an, ob die Abweichungen am Netzanschlusspunkt NAP durch die Kompensation gestiegen oder gefallen sind. Ist der Fehler gestiegen, so war die Größenänderung des Ringpuffers nachteilig und die Größenänderung muss in die andere Richtung erfolgen. Hat die Größenänderung den Fehler reduziert, so wird die Größenänderung erneut durchgeführt. Führte z.B. eine Größenreduktion zu einem kleineren Fehler E, dann wird die Größe erneut reduziert.

Das System konvergiert folglich zu einer minimalen Abweichung am Netzanschlusspunkt NAP. Die Güte kann aus einem Vergleich des Fehlers am Netzanschlusspunkt NAP mit dem Inhalt des Ringpuffers ermittelt werden. Ist eine definierte Güte erreicht, beispielsweise ist der Fehler kleiner als 10% des Ringpufferinhalts, dann wird die Optimierung der Ringpuffergröße beendet da die erreichte Ringpuffergröße nun eine gute Kompensation ermöglicht. Wird die Güte nicht mehr gewährleistet, so startet die Optimierung erneut.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

## Patentansprüche

1. Verfahren zum Betreiben eines Energiesystems (1) für ein Gebäude, wobei das Energiesystem (1) umfasst:
ein internes Stromnetz (4), das über einen Netzanschlusspunkt (NAP) mit einem öffentlichen Versorgungsnetz (3) verbunden ist;
mindestens eine lokale Energiequelle (BAT, PV) zum Bereitstellen elektrischer Energie ans interne Stromnetz (4);
mindestens einen ans interne Stromnetz (4) angeschlossenen Verbraucher (L, HH), der Energie verbraucht; und
eine Regeleinrichtung (10) zum Regeln des Energiesystems (1);
wobei das Verfahren die folgenden Schritte aufweist:
Beziehen von Energie aus dem öffentlichen Versorgungsnetz (3) und/oder aus der lokalen Energiequelle (BAT, PV);
Betreiben des Verbrauchers (L);
Erfassen von Eigenschaften einer Leistungsaufnahme des Verbrauchers (L);
Erzeugen, durch die Regeleinrichtung (10), eines Regelsignals zum Regeln der Energiequelle (BAT, PV) in Abhängigkeit der Eigenschaften der Leistungsaufnahme des Verbrauchers (L); und
Ausgeben des Regelsignals an die Energiequelle (BAT, PV).

2. Verfahren nach Anspruch 1, wobei der Verbraucher (L) seine Eigenschaften der Leistungsaufnahme an die Regeleinrichtung (10) übermittelt.

3. Verfahren nach Anspruch 1 oder 2, wobei die Energiequelle:
ein Energiespeicher (BAT) zum Speichern elektrischer Energie und/oder zum Bereitstellen elektrischer Energie ans interne Stromnetz (4); und/oder
ein lokaler Energieerzeuger (PV) zum Bereitstellen elektrischer Energie ans interne Stromnetz (4) ist.

4. Verfahren nach einem der vorhergehenden Ansprüche, ferner umfassend:
Messen, mittels eines Stromzählers (M), der am Netzanschlusspunkt (NAP) vom Versorgungsnetz (3) bezogenen und/oder ins Versorgungsnetz (3) eingespeisten Energie und Erzeugen eines entsprechenden Messsignals; und
Auswerten des Messsignals und Ermitteln der Eigenschaften der Leistungsaufnahme des Verbrauchers (L) anhand des Messsignals.

5. Verfahren nach einem der vorhergehenden Ansprüche, wobei die Eigenschaften der Leistungsaufnahme des Verbrauchers (L) eine Schaltfrequenz des Verbrauchers (L) und/oder eine Amplitude umfassen.

6. Verfahren nach Anspruch 5, wobei das Regelsignal in Abhängigkeit der Schaltfrequenz des Verbrauchers (L) erzeugt wird, wenn die Schaltfrequenz größer als eine erste Grenzfrequenz ist.

7. Verfahren nach Anspruch 6, ferner umfassend:
Hochpassfiltern des Messsignals mit einer zweiten Grenzfrequenz, die kleiner als die erste Grenzfrequenz ist.

8. Verfahren nach einem der vorhergehenden Ansprüche, wobei das Auswerten des Messsignals umfasst:
Erfassen von Leistungswerten in festen Zeitschritten des Messsignals;
Schreiben der Leistungswerte in einen Ringpuffer (RP);
Bestimmen, ob sich wiederholende Lastzustände und/oder ein Lastmuster vorliegen; und
Bestimmen der Schaltfrequenz des Verbrauchers (L) anhand der sich wiederholenden Lastzustände und/oder des Lastmusters.

9. Verfahren nach Anspruch 8, wobei eine Größe des Ringpuffers (RP) in Abhängigkeit der Schaltfrequenz des Verbrauchers (L) bestimmt wird.

10. Energiesystem (1) für ein Gebäude, umfassend:
ein internes Stromnetz (4);
mindestens eine lokale Energiequelle (BAT, PV) zum Bereitstellen elektrischer Energie ans interne Stromnetz (4);
mindestens einen ans interne Stromnetz (4) angeschlossenen Verbraucher (L, HH), der Energie verbraucht;
einen Netzanschlusspunkt (NAP), der das interne Stromnetz (4) mit einem öffentlichen Versorgungsnetz (3) verbindet, zum Beziehen von Energie aus dem öffentlichen Versorgungsnetz (3) und/oder zum Einspeisen von Energie ins öffentliche Versorgungsnetz (3); und
eine Regeleinrichtung (10) zum Regeln des Energiesystems (1);
wobei die Regeleinrichtung (10) konfiguriert ist:
Eigenschaften einer Leistungsaufnahme des Verbrauchers (L) zu erfassen;
ein Regelsignal zum Regeln der Energiequelle (BAT, PV) in Abhängigkeit der Eigenschaften der Leistungsaufnahme des Verbrauchers (L) zu erzeugen; und
das Regelsignal an die Energiequelle (BAT, PV) auszugeben.

11. Energiesystem (1) nach Anspruch 10, wobei der Verbraucher (L) kommunikativ mit der Regeleinrichtung (10) verbunden ist und konfiguriert ist, seine Eigenschaften der Leistungsaufnahme an die Regeleinrichtung (10) zu übermitteln.

12. Energiesystem (1) nach Anspruch 10 oder 11, wobei die Energiequelle:
ein Energiespeicher (BAT) zum Speichern elektrischer Energie und/oder zum Bereitstellen elektrischer Energie ans interne Stromnetz (4); und/oder
ein lokaler Energieerzeuger (PV) zum Bereitstellen elektrischer Energie ans interne Stromnetz (4) ist.

13. Energiesystem (1) nach einem der Ansprüche 10 bis 12, ferner umfassend:
einen Stromzähler (M), der konfiguriert ist, am Netzanschlusspunkt (NAP) vom Versorgungsnetz (3) bezogene und/oder ins Versorgungsnetz (3) eingespeiste Energie zu messen und ein entsprechendes Messsignal zu erzeugen, wobei
die Regeleinrichtung (10) konfiguriert ist, das Messsignal auszuwerten und die Eigenschaften der Leistungsaufnahme des Verbrauchers (L) anhand des Messsignals zu ermitteln.

14. Energiesystem (1) nach einem der Ansprüche 10 bis 13, wobei die Eigenschaften der Leistungsaufnahme des Verbrauchers (L) eine Schaltfrequenz des Verbrauchers (L) und/oder eine Amplitude umfassen.

15. Energiesystem (1) nach Anspruch 14, wobei die Regeleinrichtung (10) konfiguriert ist, das Regelsignal in Abhängigkeit der Schaltfrequenz des Verbrauchers (L) zu erzeugen, wenn die Schaltfrequenz größer als eine erste Grenzfrequenz ist.
